# EUROPEAN PATENT APPLICATION

(11) **EP 3 176 409 A1**
(43) Date of publication of application: **07.06.2017**
(21) Application number: 16200336.2
(22) Date of filing: 23.11.2016
(51) Int. Cl.: F02C 7/143, F04D 27/02, F02C 7/18, F02C 9/18

(54) **CLOSED LOOP COOLING METHOD FOR A GAS TURBINE ENGINE**

(30) Priority: 03.12.2015 US 201514957978
(71) Applicant: General Electric Company, Schenectady, NY 12345 (US)
(72) Inventor: SENNOUN, Mohammed El Hacin, Cincinnati, OH 45215 (US); BUNKER, Ronald Scott, Cincinnati, OH 45215 (US)
(74) Representative: Williams, Andrew Richard

(57) **Abstract**

An apparatus and method of cooling a gas turbine engine 10 having a compressor 24, 26 with multiple, axially arranged stages 52, 54 of paired rotating blades 56, 58 and stationary vanes 55, 57, 60, 62 located between an outer compressor casing 82 and inner compressor casing 80, comprising a closed loop cooling of the compressor 24, 26 by routing a liquid coolant 98, 100 through the vanes 55, 57, 60, 62 of at least some of the compressor stages 52, 54 and through an intercooler 88 to draw heat into the liquid coolant 98, 100 and routing the heated liquid coolant 98, 100 through a heat exchanger 76.

## Description

### BACKGROUND

Turbine engines, and particularly gas or combustion turbine engines, are rotary engines that extract energy from a flow of combusted gases passing through the engine in a series of compressor stages, which include pairs of rotating blades and stationary vanes, through a combustor, and then onto a multitude of turbine stages. In the compressor stages, the blades are supported by posts protruding from the rotor while the vanes are mounted to stator casing. Gas turbine engines have been used for land and nautical locomotion and power generation, but are most commonly used for aeronautical applications such as for airplanes, including helicopters. In airplanes, gas turbine engines are used for propulsion of the aircraft.

Gas turbine engines for aircraft are designed to operate at high temperatures to maximize engine thrust, so cooling of certain engine components, such as a gearbox or vanes is necessary during operation. It is desirable to increase and utilize the thermal capacity of the compressor to perform desirable thermal management of the engine system.

### BRIEF DESCRIPTION

In one aspect, the invention relates to a method of cooling a gas turbine engine having a compressor with multiple, axially arranged stages of paired rotating blades and stationary vanes located between an outer compressor casing and inner compressor casing, the method comprising a closed loop cooling of the compressor by routing a liquid coolant through the vanes of at least some of the stages and through an intercooler to draw heat into the liquid coolant and routing the heated liquid coolant through a heat exchanger.

In another aspect, the invention relates to a gas turbine engine comprising a core comprising a compressor section, combustor section, and turbine section in axial flow arranged and enclosed within a core casing, with the compressor section having multiple, axially arranged stages of paired rotating blades and stationary vanes. The engine further comprises a fan section in axial flow arrangement and located upstream of the core providing a bypass air flow around the core casing. A closed loop cooling circuit having a pump, an intercooler located upstream of the compressor section, a heat exchanger located within the bypass air flow, and a coolant conduit passing through the pump, intercooler, heat exchanger, and at least some of the stationary vanes is in place. The pump pumps coolant through the coolant conduit to draw heat from the stationary vanes and the intercooler into the coolant to form heated coolant, the heated coolant then passes through the heat exchanger, where the heat is rejected from the coolant to the bypass air to cool the coolant to form cooled coolant, which is then returned to the stationary vanes and the intercooler.

### BRIEF DESCRIPTION OF THE DRAWINGS

In the drawings:
Figure 1 is a schematic, sectional view of a gas turbine engine according to an embodiment of the invention.
Figure 2 is a schematic of a compression section of the gas turbine engine of Figure 1 with intercooling of some of the compressor stages.
Figure 3 is a flow chart depicting a method of cooling a gas turbine section.

### DETAILED DESCRIPTION

The described embodiments of the present invention are directed to systems, methods, and other devices related to routing air flow in a turbine engine. For purposes of illustration, the present invention will be described with respect to an aircraft gas turbine engine. It will be understood, however, that the invention is not so limited and may have general applicability in non-aircraft applications, such as other mobile applications and non-mobile industrial, commercial, and residential applications.

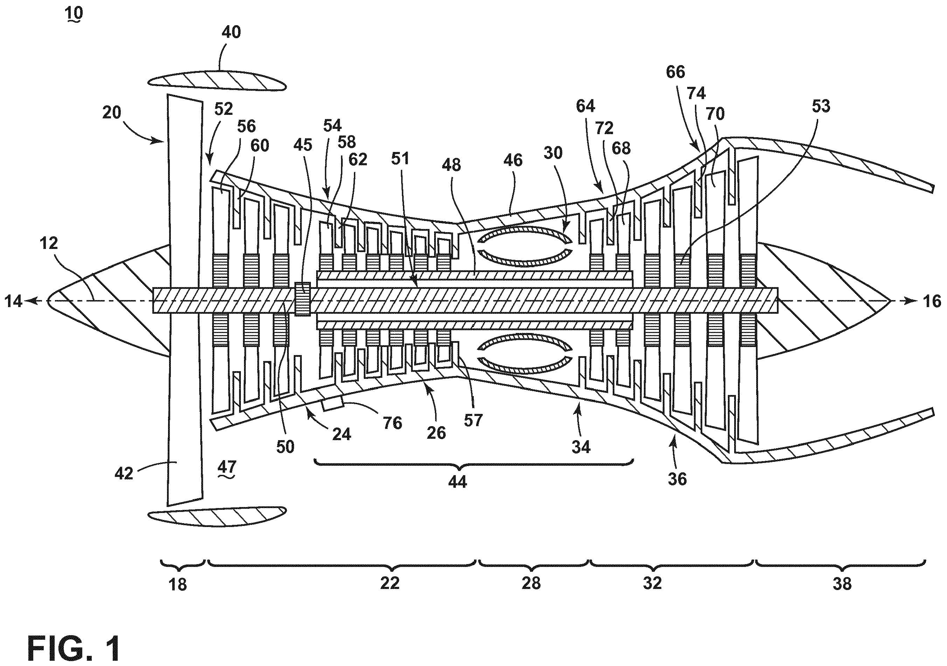

Figure 1 is a schematic cross-sectional diagram of a gas turbine engine, which can comprise a gas turbine engine 10, for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38. The compressor section 22, combustion section 28, and turbine section 32 are in axial flow arranged and enclosed within a core casing 46.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by the core casing 46, which can be coupled with the fan casing 40. At least a portion of the fan casing 40 encircles the core casing 46 to define an annular bypass channel 47.

A HP drive shaft or spool 48 disposed coaxially about the centerline 12 of the engine 10 drivingly connects the HP turbine 34 to the HP compressor 26. A LP drive shaft or spool 50, which is disposed coaxially about the centerline 12 of the engine 10 within the larger diameter annular HP spool 48, drivingly connects the LP turbine 36 to the LP compressor 24 and fan 20. The portions of the engine 10 mounted to and rotating with either or both of the spools 48, 50 are also referred to individually or collectively as a rotor 51.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle), each set comprising a pair, to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in Figure 1 were selected for illustrative purposes only, and that other numbers are possible. The blades 56, 58 for a stage of the compressor can be mounted to a disk 53, which is mounted to the corresponding one of the HP and LP spools 48, 50, with each stage having its own disk. The vanes 60, 62 are mounted to the core casing 46 in a circumferential arrangement about the rotor 51. The compressor is not limited to an axial orientation and can be oriented axially, radially, or in a combined manner.

The LP compressor 24 and the HP compressor 26 can further include at least one guide vane which can be an inlet guide vane 55 positioned on the upstream end of the compressor section 22 and an outlet guide vane 57 positioned on the downstream end of the compressor section 22. The vanes are not limited to one type and can be for example non-variable stator vanes or stator vanes.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in Figure 1 were selected for illustrative purposes only, and that other numbers are possible.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

Some of the ambient air supplied by the fan 20 can bypass the engine core 44 as a bypass air flow and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28.

Hot portions of the engine also exist within the compressor section 22 and therefore the ambient air supplied by the fan 20 or cooler air from the compressor can be utilized, but not limited to, cooling portions of the compressor section 22. The bypass air flow can pass through a heat exchanger 76, located upstream of the compressor 26, within the bypass air flow of the bypass channel 47. Though illustrated within the bypass channel 47, the location of the heat exchanger 76 is not limited to the bypass channel and can be located at any suitable position within the engine 10.

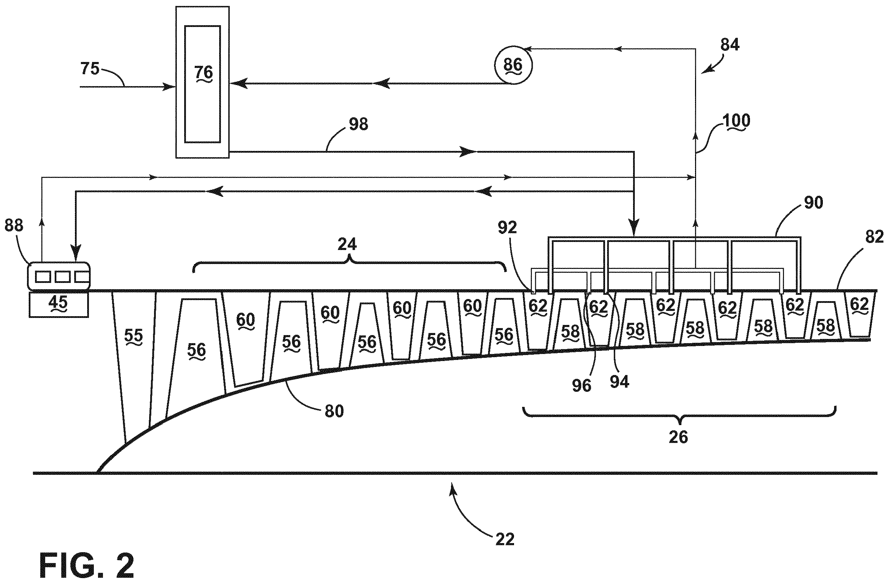

Referring to Figure 2, a schematic of the compressor section 22 further illustrates an inner compressor casing 80 comprising, the rotor 51, and an outer compressor casing 82 disposed within the core casing 46. The multiple, axially arranged stages 52, 54 of paired rotating blades 58 and vanes 62 are located between the outer compressor casing 82 and the inner compressor casing 80. A closed loop cooling circuit 84 having a pump 86, an intercooler 88, a heat exchanger 76, and a coolant conduit 90 passing through the pump 86, intercooler 88, heat exchanger 76, and at least some of the vanes 62 is located proximate the compressor section 22. The coolant conduit 90 allows liquid coolant to travel in the closed loop cooling circuit 84 by utilizing the pump 86 to pump coolant through the coolant conduit 90. The intercooler 88 and heat exchanger 76 can be any suitable type of heat exchanger, including, but not limited to surface coolers. Furthermore the intercooler 88 can comprise an inlet guide vane 55 and the heat exchanger 76 can comprise or be located adjacent to an outlet guide vane 57.

The core casing 46 includes passages 92 through the outer compressor casing 82 each including an inlet 94 and an outlet 96 to allow the coolant conduit 90 access to and from the vanes 62. The coolant conduit 90 connects the heat exchanger 76 to at least one of the plurality of vanes 62 through the inlet 94 and then to the pump 86 via the outlet 96 after which the coolant conduit 90 is connected back to the heat exchanger 76.

In one implementation, the engine 10 can further comprise a gearbox 45 that can be located at any suitable position within the engine 10 such that it connects the fan 20 of the fan section 18 to the spool 48, 50 of the core 44. The gearbox allows the fan to run at a different speed than the engine. The closed loop cooling circuit 84 includes a connection via the coolant conduit 90 from the heat exchanger 76 to the intercooler 88 and back to the heat exchanger 76 wherein the intercooler 88 is provided on the gearbox 45. The intercooler 88 can be disposed on the gearbox 45 and the core casing 46.

An optional flow control device, for example, but not limited to, a control valve, can be included in the loop such that coolant flow to the intercooler 88 can be either on, off, or modulated depending on operating conditions.

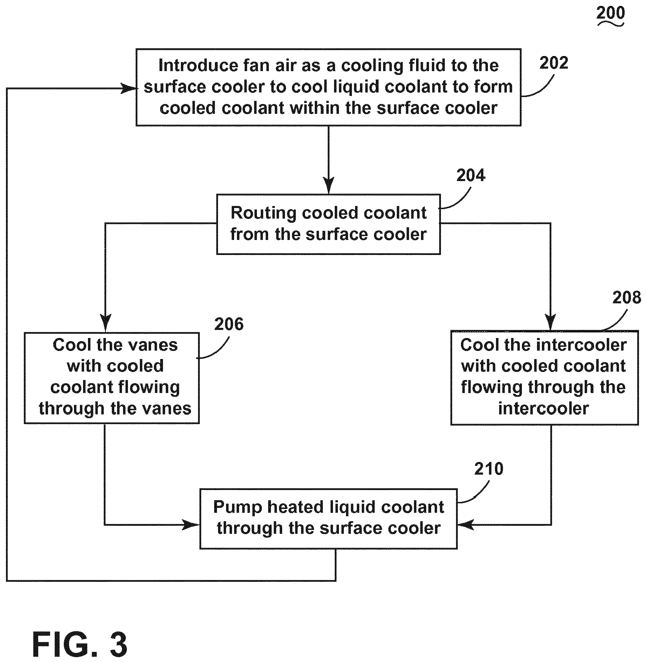

Referring now also to Figure 3 a flow chart illustrating a method 200 of cooling a gas engine turbine by first 202 introducing fan air 75 as a cooling fluid to the heat exchanger 76. This fan air 75 passes over the heat exchanger 76 to cool liquid coolant to form cooled coolant 98 within the heat exchanger 76. Then in step 204 the cooled coolant 98 is routed from the heat exchanger 76 through 206 the vanes 62 and to 208 the intercooler 88 to cool the vanes and the intercooler. Upon passing through the vanes 62 and intercooler 88 the liquid coolant draws heat from the vanes 62 and the intercooler 88 forming heated coolant 100. Then in step 210 the heated coolant 100 flows from the vanes 62 to the pump 86, which can comprise a compressor, and then continues to the heat exchanger 76 where heat is further rejected from the coolant to the bypass air to cool the coolant to form the cooled coolant 98. The cooled coolant 98 is then returned to the vanes 62 and to the intercooler 88 and the process repeats. The cooled coolant 98 can be used to cool other items such as the gearbox 45 or core casing 46 via the intercooler 88.

Conventional means of moving liquid, gas, or a two-phase mixture can be used to pump the liquid coolant. The pump is a pressure rise device, for example a pump or a compressor. The pump or compressor can be driven using work from the engine for example a connecting gear on the shaft, or using electrical power generated from the engine.

It should be noted that an intercooler as described in the disclosure above is a mechanical device that can be any type of heat exchanger and should not be confused with the thermodynamic cycle of cooling a compressor stage or set of stages, i.e. intercooling.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method of cooling a gas turbine engine having a compressor with multiple, axially arranged stages of paired rotating blades and stationary vanes located between an outer compressor casing and inner compressor casing, the method comprising a closed loop cooling of the compressor by routing a liquid coolant through the vanes of at least some of the stages and through an intercooler to draw heat into the liquid coolant and routing the heated liquid coolant through a heat exchanger.
2. The method of clause 1, wherein the routing the liquid coolant through at least some of the vanes comprises routing the liquid coolant through variable stator vanes.
3. The method of any preceding clause, wherein the routing the liquid coolant through at least some of the vanes comprises routing the liquid coolant through non-variable stator vanes.
4. The method of any preceding clause, wherein the routing the liquid coolant through the intercooler comprises routing the liquid coolant through a heat exchanger.
5. The method of any preceding clause, wherein the routing the liquid coolant through the heat exchanger comprises routing the liquid coolant through a heat exchanger located upstream of the compressor.
6. The method of any preceding clause, wherein the routing the liquid coolant through a heat exchanger comprises routing the liquid coolant through at least one of inlet guide vanes and outlet guide vanes for the compressor.
7. The method of any preceding clause, further comprising passing a cooling fluid through the heat exchanger.
8. The method of any preceding clause, wherein the cooling fluid comprises air from a fan section of the gas turbine engine.
9. A gas turbine engine comprising:
   a core comprising a compressor section, combustor section, and turbine section in axial flow arranged and enclosed within a core casing, with the compressor section having multiple, axially arranged stages of paired rotating blades and stationary vanes;
   a fan section in axial flow arrangement and upstream of the core, the fan section providing a bypass air flow around the core casing; and
   a closed loop cooling circuit having a pump, an intercooler located upstream of the compressor section, a heat exchanger located within the bypass air flow, and a coolant conduit passing through the pump, intercooler, heat exchanger, and at least some of the stationary vanes;
   wherein the pump pumps coolant through the coolant conduit to draw heat from the stationary vanes and the intercooler into the coolant to form heated coolant, the heated coolant then passes through the heat exchanger, where the heat is rejected from the coolant to the bypass air to cool the coolant to form cooled coolant, which is then returned to the stationary vanes and the intercooler.
10. The gas turbine engine of any preceding clause, wherein the stationary vanes are variable stationary vanes.
11. The gas turbine engine of any preceding clause, wherein the intercooler is located on the core casing.
12. The gas turbine engine of any preceding clause, wherein the intercooler is a heat exchanger.
13. The gas turbine engine of any preceding clause, wherein the intercooler comprises inlet guide vanes to the compressor section.
14. The gas turbine engine of any preceding clause, further comprising a gearbox connecting a fan of the fan section to a drive shaft of the core, and the intercooler cools the gearbox.
15. The gas turbine engine of any preceding clause, wherein the intercooler is a heat exchanger provided on the gearbox.
16. The gas turbine engine of any preceding clause, wherein at least a portion of the fan casing encircles the core casing to define an annular bypass channel and the heat exchanger is located within the bypass channel.
17. The gas turbine engine of any preceding clause, closed loop cooling circuit further comprises a two-phase mixture.
18. The gas turbine engine of any preceding clause, wherein the coolant comprises a two-phase mixture.
19. The gas turbine engine of any preceding clause, wherein the heat exchanger comprises a surface cooler.
20. The gas turbine engine of any preceding clause, wherein the compressor comprises outlet guide vanes and the heat exchanger is located adjacent the outlet guide vanes.

## Claims

1. A method of cooling a gas turbine engine (10) having a compressor (24, 26) with multiple, axially arranged stages (52, 54) of paired rotating blades (56, 58) and stationary vanes (60, 62) located between an outer compressor casing (82) and inner compressor casing (80), the method comprising a closed loop cooling of the compressor (24, 26) by routing a liquid coolant (98, 100) through the vanes (60, 62) of at least some of the stages (52, 54) and through an intercooler (88) to draw heat into the liquid coolant (98, 100) and routing the heated liquid coolant (98, 100) through a heat exchanger (76).

2. The method of claim 1, wherein the routing the liquid coolant (98, 100) through at least some of the vanes (60, 62) comprises routing the liquid coolant (98, 100) through variable stator vanes (60, 62).

3. The method of either of claim 1 or 2, wherein the routing the liquid coolant (98, 100) through at least some of the vanes (60, 62) comprises routing the liquid coolant (98, 100) through non-variable stator vanes (60, 62).

4. The method of any preceding claim, wherein the routing the liquid coolant (98, 100) through the intercooler (88) comprises routing the liquid coolant (98, 100) through a heat exchanger (76).

5. The method of claim 4, wherein the routing the liquid coolant (98, 100) through the heat exchanger (76) comprises routing the liquid coolant (98, 100) through a heat exchanger (76) located upstream of the compressor (24, 26).

6. The method of claim 4, wherein the routing the liquid coolant (98, 100) through a heat exchanger (76) comprises routing the liquid coolant (98, 100) through at least one of inlet guide vanes (55) and outlet guide vanes (57) for the compressor (24, 26).

7. The method of any preceding claim, further comprising passing a cooling fluid (75) through the heat exchanger (76).

8. The method of any preceding claim, wherein the cooling fluid (75) comprises air from a fan section (18) of the gas turbine engine (10).

9. A gas turbine engine (10) comprising:
a core comprising a compressor section (22), combustor section (28), and turbine section (32) in axial flow arranged and enclosed within a core casing (46), with the compressor section having multiple, axially arranged stages (52, 54) of paired rotating blades (56, 58) and stationary vanes (60, 62);
a fan section (18) in axial flow arrangement and upstream of the core, the fan section providing a bypass air flow around the core casing; and
a closed loop cooling circuit (84) having a pump (86), an intercooler (88) located upstream of the compressor section, a heat exchanger (76) located within the bypass air flow, and a coolant conduit (90) passing through the pump, intercooler, heat exchanger, and at least some of the stationary vanes;
wherein the pump (86) pumps coolant through the coolant conduit (90) to draw heat from the stationary vanes and the intercooler into the coolant to form heated coolant, the heated coolant then passes through the heat exchanger, where the heat is rejected from the coolant to the bypass air to cool the coolant to form cooled coolant, which is then returned to the stationary vanes and the intercooler.

10. The gas turbine engine (10) of claim 9, wherein the stationary vanes are variable stationary vanes.

11. The gas turbine engine (10) of either of claim 9 or 10, wherein the intercooler is located on the core casing.

12. The gas turbine engine (10) of any of claims 9 to 11, wherein the intercooler is a heat exchanger.

13. The gas turbine engine (10) of any of claims 9 to 11, wherein the intercooler comprises inlet guide vanes to the compressor section.

14. The gas turbine engine (10) of any of claims 9 to 13, further comprising a gearbox connecting a fan of the fan section to a drive shaft of the core, and the intercooler cools the gearbox.

15. The gas turbine engine (10) of claim 14, wherein the intercooler is a heat exchanger provided on the gearbox.
